(19) Europäisches Patentamt
European Patent Office
Office européen des brevets

(11) Publication number: 0 429 883 A2

(12) # EUROPEAN PATENT APPLICATION

(21) Application number: 90120984.1

(51) Int. Cl.$^5$: C05F 17/00, C05F 17/02

(22) Date of filing: 02.11.90

(30) Priority: 17.11.89 IT 2243089

(43) Date of publication of application:
05.06.91 Bulletin 91/23

(84) Designated Contracting States:
AT BE CH DE DK ES FR GB GR LI NL SE
Bulletin 00/2

(71) Applicant: Bottai, Gabriele
Via Salvator Rosa, 10
I-20035 Lissone (MI)(IT)

Applicant: D'Aloisio, Gaetano
Via Bassa, 64
I-54036 Marina di Carrara(IT)

(72) Inventor: Bottai, Gabriele
Via Salvator Rosa, 10
I-20035 Lissone (MI)(IT)
Inventor: D'Aloisio, Gaetano
Via Bassa, 64
I-54036 Marina di Carrara(IT)

(74) Representative: Incollingo, Italo
Piazzale Lavater, 3
I-20129 Milano(IT)

(54) **System and devices for the preparation of recovery products from waste and the like, in particular of enriched soil amendment.**

(57) In the system according to the invention, for the preparation of recovery products from waste materials, by-products, organic wastes and similar, in particular of soil amendment, enriched of suitable nutrients, the collection preferably differentiated of feedstocks and starting materials is carried out in spaces wherein they undergo biological and chemo-physical treatments (for example: addition, mixing, digestion, refining, enrichment, etc.) up to obtaining optimal formulations for example of soil amendments and to the relevant distribution just during transportation from the collection site to the utilization site, preferably with interaction of exhausted gas of transportation vehicles.

The transportable containers to be used the operation of the system and for the elimination of site problems are of modular type, assemblable, intercommunicable, of adjustable capacity, and comprise at least: means supporting a layer of compost being or to be inoculated with active microbial substance; means for the collection and the recycling of waste percolate; means for the immission of oxydizing agents; means for the treatment of and/or with combustion off gas from transportation vehicles; means for controlling collection flows of air, of off gases, of waste percolate, etc. for optimizing operating conditions.

EP 0 429 883 A2

Xerox Copy Centre

Fig. 2

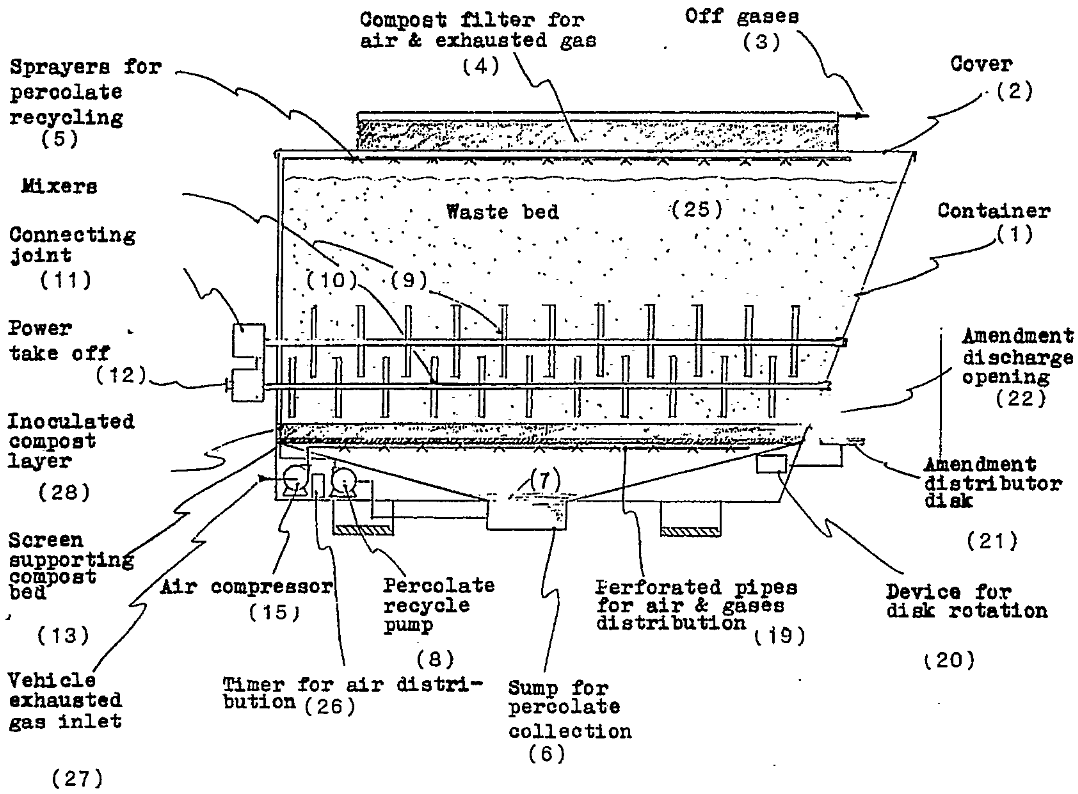
Compost filter for air & exhausted gas (4)
Off gases (3)
Sprayers for percolate recycling (5)
Cover (2)
Mixers
Waste bed (25)
Container (1)
Connecting joint (11)
(10) (9)
Power take off (12)
Amendment discharge opening (22)
Inoculated compost layer (28)
Amendment distributor disk (21)
(7)
Screen supporting compost bed (13)
Air compressor (15)
Percolate recycle pump (8)
Perforated pipes for air & gases distribution (19)
Device for disk rotation (20)
Vehicle exhausted gas inlet (27)
Timer for air distribution (26)
Sump for percolate collection (6)

The present invention refers to a system or process for the preparation of a recovery product in particular of amendment for agricultural use from feedstocks such as waste, by-products, organic waste (for example: municipal solid waste, waste from fruit & vegetable markets, from slaughterhouses, from agroindustry, from food industry, from cafeterias, from gardening operations, from digested sludge of water purification systems, etc.) especially undesirable materials from environmental point of view such as algae and the like.

The invention includes also the spaces and containment bodies wherein the steps, operations, treatments, etc. of the captioned system are accomplished continuously and without discharges or intermediate storages, thus avoiding site selection problems of treatment plants and preferably reducing problems connected to the off gases of transportation vehicles.

## PRIOR ART

The several advantages obtainble from recovery products of waste, by-products, algae and the like, in particular from organic soil amendment are well known. Many processes are thus known for the production of soil amendment (so called compost) from organic selected matter coming from different sources, even though according to Italian Law compost is only derived from municipal solid waste.

Systems nowadays used show a few advantages as well as many drawbacks. Among the latter we only mention that composting plants are not optimally localized and produce low quality compost due to organic matter locally available, most of the time without the enrichment of other more valuable organic fractions not available locally (for instance: from slaughterhouses, from fruit & vegetable markets, from cafeterias, from agroindustry by-products, from gardening operations, from water purification digested sludges, from sea cleaning operations, etc.); these diversified organic matter fractions are needed to equilibrate fundamental biological ratios. Thus resuslting that present plants are not suitable for a geographic generalization: quite often, where a particular amendment is needed, no feedstock is available to produce it in a suitable plant.

Present form of waste up grading for agriculture use prevents a generalized diffusion of recycling and composting plants. As a matter of fact this type of plant use les than 3 % of municipal solid waste and the like produced in Italy. In fact, site selection is the major limitation to waste disposal strategies more than any other economic evaluation. Waste treatment plants face many environmental problems and consequently enmity of people living the area.

Waste pyrolysis and disposal costs constantly increase due to the normal increasing of investment and operation costs.

## THE INVENTION

First object of the present invention is to provide a system or a method enabling to eliminate the above mentioned inconvenients and producing amendment or the like of high quality, notwithstanding site selection problems.

Another object of the present invention is providing containers for collecting waste materials, transporting them from the collection site to the utilization site preferably without intermediate dicharges, and at the same time processing them up to the optimal composition level and applying them onto the final site.

The main feature of the system according to the invention and of the relevant means for its embodiment can be taken from the herebelow reported claims, meanwhile various aspects and advantages of the invention are better understandable from the description of annexed drawings which refer to a form of preferred realization however not restrictive of the system as well as of the containers.

The invention is represented in its generality in the flow diagram of Figure 1 and consists of (phase I) a number of differentiated collection of material preferably of reduced dimensions R1 (for example municipal solid waste) R2 (for example slaughterhouses waste).....Ri (for example fruite & vegetable market waste).....and Rn (for example vegetable matter such as algae) in different specific collection sites LRn, in collection spaces C1, C2,....Ci,.... Cn, each one of them preferably with specific predisposition and inoculum (phase II).

In phase I said containers C1-Cn are taken from their storage DC to the differentiated collection sites LRn by at least one of suitable vehicles. In a third phase (phase III) materials P1,P2,....Pi,....Pn as soon as collected in each container (C1-Cn are preferably previously grinded, mixed and enriched in MA1,MA2,....MAi,....MAn with inoculum INO, active compost COMA, organic substratum SUO, etc., carried through the lines T1-Tn (shown for an easy representation as a single line).

At this point it is good to clarify that all passages from a treatment phase to another are indicated with transversal lines $Vi, Vi', Vi'', Vi'''$, while feed lines (for example pipes) of additives, treating agents, etc. are indicated with transversal lines (multilineal) Ti-Tn, $Ti'$-$Tn'$, $Ti''$-$Tn''$. By these specifications it is easy to see that mixed and enriched materials MAi in III pass through a phase (IV) of secondary maturation MS1-MSn, out of which they can receive (for example along lines Ti″-Tn″) other composts COMA′ and go to phase V of refining RA1-RAn). Final phase VI of direct distribution to the soil (field or fields) CAMi follows said phase V.

Final phase VI of direct distribution to the soil (field or fields) CAMi follows said phase V.

Between phase V (refining) and phase VI of applications of final product (for example agricultural amendment) having optimized composition, a molding phase, for example granulation GU, and/or a separation phase, for example screening VA, from possible residues of iron, plastic or other undersired inorganic matter left in the starting materials, in spite of preselection executions, for at lest a part of the refined materials RA1-RAn, going to the molder, for example the granulator GU, through transversal L1-Ln and/or transversal lines L1′-Ln′ shown as two ways lines because material taken to GU and/or to VA (Arrow toward right) after molding and/or screening can be taken (vertical lines Vi‴) to the distribution DTi and pouren onto the soil(s) CAMi by means of VS1-VSn.

According to an aspect of the invention, in one or more phases from I to VI the processed product undergoes the direct or indirect action of exhaust gases GC, GC1, GC2, GC3 from the transportation vehicle on the way from DC trough LRn, RA, to CAMi.

According another valuable aspect of the invention, already in phase II, however mostly in phases III, IV, V and VI, mixings and horizontal transfers can occur (two ways arrows Fo, F1, F2, F3, F4) that is materials from one container can be at least partly mixed with those of another container, at a parity of phases.

A container ci is shown in Figure 2 represented in a schematic partial cross-section, consisting of a cylindrical or parallelepiped body 1 having a top cover that can be opened for the feeding of collected material. A filter 4 is preferably present in the upper zone for reaction gas and or exhaust gases from transportation vehicle 3. In a preferred embodiment the filter is shaped like an interchangeable cartridge, which is removed as soon as it is exhausted, to be substituted with a fresh one.

Spraying pipes 5 are also provided in the upper zone for recycling of percolate 7, collected in the bottom chamber 6 and recycled by means of one or more pumps 8. As shown in Figure 3, in the said upper zone a high pressure water sprayer 29 can be placed, made up of a movable pipe, coming from its housing slot by means of a drive. The water spraying is used for washing drums and waste containers. Wash out water is then collected in the bottom chamber 6.

Central body is occupoed by rotating paddle mixers 9 and 10 whose shafts can even be hollow and allowing gaseous products passing through and homogeneously distributing. Each shaft is externally associated with a connection with a drive 12 and to a connecting joint 11 in order to transfer the movement from a shaft to the other.

other preferred embodiment of the mixing step is shown in Figure 32, where the rotating paddle mixers 9 and 10 are substituted with two slat conveyors 30, running on the bottom of the container as to drag lengthwise the material. However, and this is another important aspect of the invention, one conveyor moves in the opposite direction of the other. In this way both conveyors give some mixing to the mass. In order to facilitate the mixing, the extreme container wall, opposite to the amendment discharge opening side 22, can be built in convex form 31 to promote the rising of the conveyed material and its overturning on the laid upon mass tha waste bed 25. Moreover internal drives, for istance s des and/or grooves and/or ducts can be built on both laterial walls of the container, with the purpose of promoting the flow of the upper layers of the material standing upon the dragged mass.

Another alternative mixing system, simpler than paddle mixers and countermoving slat conveyors is a rotary drill like mixer 32 (shown in dotted lines in Figure 3), which is externally driven by an articulated arm placed outside the container, penetrating from the above into the mass and moving inside the container, always rotating around its vertical axis for a thorough mixing of the material.

A screen 13 is provided on the bottom for supporting a compost bed COMA and/or a compost layer with inoculum INO as well as an organic substrate SUO (Figure 1). A compressor 15 sends air under pressure mixed or not with exhausted gases GC from the transportation vehicle. Reference 19 indicates a series of perforated pipes for the immission of said air and/or exhausted gases, while references 20, 21 and 22 show respectively: a device for the movement of the distributor 20, the distribution disk 21 for amendment application to the soil(s) CAMi, the opening 22 for the discharge of the amendment onto the distributing disk, placed in correspondence of the discharging mass flow.

Containment body 1 can be preferably equipped with a jacket (not represented) for hot fluid flowing (air, steam and/or exhaust gases) in order to obtain an indirect heat exchanger, in lieu of or in addition to direct heat exchanges between the waste bed 25 and inlet fluids. Jacket can alternatively be filled up of insulating material for maintaining the temperature of the mass which can be standing to severe climatic conditions due to extremely cold winters and/or to very hot summers.

Reference 26 shows a controlling device of said fluid flow. In an advantageous embodiment of the invention, filter 4 also acts as a deodorizer.

The above described means which are equipping the transportable containers are of modular type, interchangeable and assemblable to each container in order to obtain various configurations.

An already anticipated, without taking into account any economic evaluation, site selection is the most limiting issue of waste disposal strategies.

The proposed process diminishes problems connected with the site and requirements of collection and storage are shifted on mobile containers which operate the following operations in the same equipment:

- waste collection
- trasportation
- digestion
- storage
- application or distribution on soil.

As a matter of fact, from psycological point of view, a site is difficulty contestable if already selected for collection in containers previously accepted for this service. From a political and strategical point of view there is no doubt that this trend must be supported and stimulated more and more, because it represents the only disposal form capable of generating on medium and long term a progressive decreasing of waste disposal cost.

On the contrary pyrolysis and landfilling costs, the only two disposal alternatives to recycling, are compelled to an increasing due to the normal increase of investment and operating costs.

In a preferred embodiment, containers are modular, hookliftable on truck, on rail wagon, on boat, etc. and assemblable thus essentially adaptable to various types of organic matter foreseen for collection, however capable of being used for the application to the soil.

As already seen, each one of them is equipped as to allow during digestion, which occurres while the material is in the container, air immission, exausted gas immission, etc., to such a level as to maintain aerobic digestion temperature and material moisture such enabling complete elimination of pathogenic microorganisms and then to reach the full guarantee, after a certain number of hours, to obtain a product without hygienic and healthy problems.

From the collection, preferably differentiated, of various organic matters, after transportation to the refining site and after digestion in the single containers, a differentiated organic pool is obtained of raw materials having different specification, according to the source, allowing to prepare on refining plant formulations tailored to the soil and to the crops.

Use of containers facilitates product formulations, having not only a high number of raw materials, but also in presence of organic materials such as the algae or similar products, having constant composition, however seasonal availability and in a relatively small amounts for the time being.

Further advantages of the novel production technique are the following:

- deodorization of organic waste handled during the phases of collection, transportation, digestion, refining and sol application
- acceleration of mass hygienization and of humus formation processes
- reduction of overall time of production of the amendment
- quality control of final product, both as production standard as well as control of polluting elements (heavy metals, etc.)
- easy handling of the product, without hygienic and health problems
- possibility of formulation specific products tailored to various crops, having available an high variety of raw materials, with different content of active matter.

As already seen, the system of the present invention consists of feeding from the upper part of a container open on the top (see Fig. 2) the preselected organic matter, that is preferably free of metals, plastic material and glass.

The container is essentially a metal vessel, suitable for an easy loading or unloading (for example by hooklifting) on or from truck, rail wagon, boat, etc. and can have a capacity preferably ranging from 2 to 30 cubic meters.

The container has in its lower part a screen supporting a layer of organic matter in an advanced digestion stage, suitably inoculated as to modify the composition of microbial mass of the material fed. Said layer can have a thickness ranging from 3 cm. up to an height of one third of the container. However the most convenient condition is that one maximizing the digestion material volume and thus minimizing the layer of organic matter in advanced digestion stage.

A thickness of 10 cm is the optimum value for a container of 20 cubic meters.

The container bottom is sloped as to collect the percolate, which is recovered by means of a pump and it is sprayed onto the bed of digestion material.

Oxydizing air is forced through the digesting bed by means of a fan and perforated pipes placed at the bottom of the digester. Air flow allows a complete aerobic digestion of the organic matter. The air flow is controlled by a timer running in accordance of digesting waste. Air flow, exhausted gas and reaction gases pass through a layer of digested product which acts as a deodorizing filter.

Air flow, exhausted gas and recycled percolate are controlled according to the temperature, the oxygen and the moisture of the digesting mass.

The oxydizing can be carried out also, in accordance to a well known technique, under air suction instead of air compression. In such a case the filter for air and for exhausted gas can be a container containing digested organic material, separated from the main container, where air and off gas from the main container are collected.

Mass homogenizing during digestion is performed by one or preferably three rotating mixers placed along the length of the container; or by two conveyors running in opposite directions and/or by an external mixing arm.

Said mixers homogenize the product during feeding of other materials (inoculum, other amendments, organic substratum, other nutritional elements, etc.) in order to obtain a product formulated according to the farmer need.

The same mixing system causes the conveying and the amendment discharge from the container, once the discharge opening is activated, during its application to the soil. Correct spraying is performed by a rotating disk where the amendment is falling provided the exit is opened.

It has surprisingly been found also that during the system treatment, the best and very favorable conditions are obtained where the $NH_3$ produced easily reacts through the oxygen with the components (CO, $CO_2$, $SO_2$, $H_2S$, $NO_x$, etc.) of combustion gas mixtures (preferably coming from Diesel motors equipping transportation vehicles) up to obtaining reaction products having highly fertilizing properties, such as ammonium sulphate, ammonium nitrate, ammonium carbonate and the like. The presence of said products imparts to the final product synergetic nutritional properties in addition to the conditionining properties of the amendment.

It has also been found that part of the amendment during digestion, in particular of the amendment constantly present in the filtering body (4) is generally enough to remove most of the pollutant and cancerous components and of the solid particulate, present in the combustion gases, also during the way back from CAMi to LRn of the empty transportation vehicle.

## Claims

1) System for the preparation of recovery products from waste, by-products, organic matter environmentally undesirable, and the like, in particular of amendment for agricultural use, enriched of nutritional elements and characterized by the fact that recovery products are submitted to biological and chemo-physical treatments up to obtaining optimal specific formulations of enriched amendment, from the site(s) of collection to the distribution site(s) and soil application, in absence of a substantially fixed site for the processing of recovery products.

2) System according to claim 1, characterized by the fact that the preparation of the enriched amendment takes place during the transportation of waste products from the collection area to the utilization site.

3) System according to the above claims, characterized by the fact that with waste products undergoing treatment during transportation from the collection sites to the utilization sites, exhausted combustion gases of the trasportation vehicles are also processed.

4) System according to the above claims, characterized by a differentiated waste collection phase in predisposed and possibly inoculated spaces; mixing and enrichment of collected materials with activated compost, inoculum and/or organic substratum; secondary digestion; refining of digested products preferably additioned with other amendment; refining; possible molding and/or screening; and application onto the soil.

5) System according to claim 4, characterized by injections of air, gases (off-gases from combustion or not), as to facilitate the formation of nutritional products, having fertilizing properties, in synergy with thephysical characteristics of the amendment.

6) System substantially in accordance to what has been described and represented.

7) Containers of modular type, assemblable, intercommunicable, hookliftable, having adjustable capacity for the embodiment of the system according to the above mentioned claims and for the elimination of conventional site problems, characterized by:

- a collection body,
- means for the introduction of waste in said body of preferably differentiated collection,
- supporting means of a layer of amendment preferably inoculated,
- means for the collection and the recyclig of the percolate,
- means for the pushing and/or the suction of oxydizing agents; means for the treatment of and/or with combustion gases of the transportation vehicles,
- means for controlling the flows of collected air, of the combustion off-gases, of the percolate;

8) Containers according to claim 7, characterized by filters associated or separated from the containing body, for deodorizing, for reducing the moisture, for maintaining the optimal temperature, respectively for purification of off-gases.

9) Containers substantially according to what described and represented.

Fig. 1
FLOW DIAGRAM

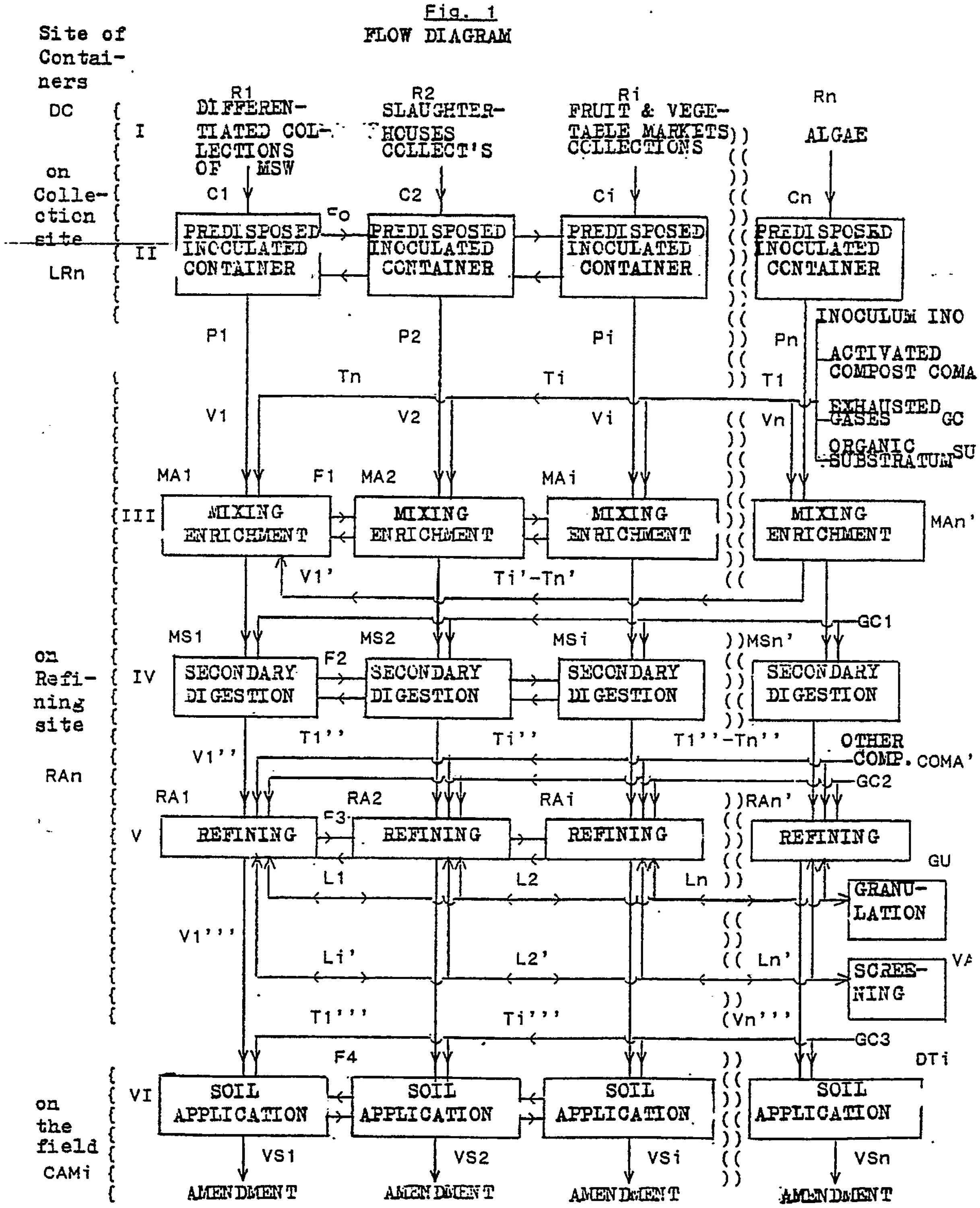

Fig. 2

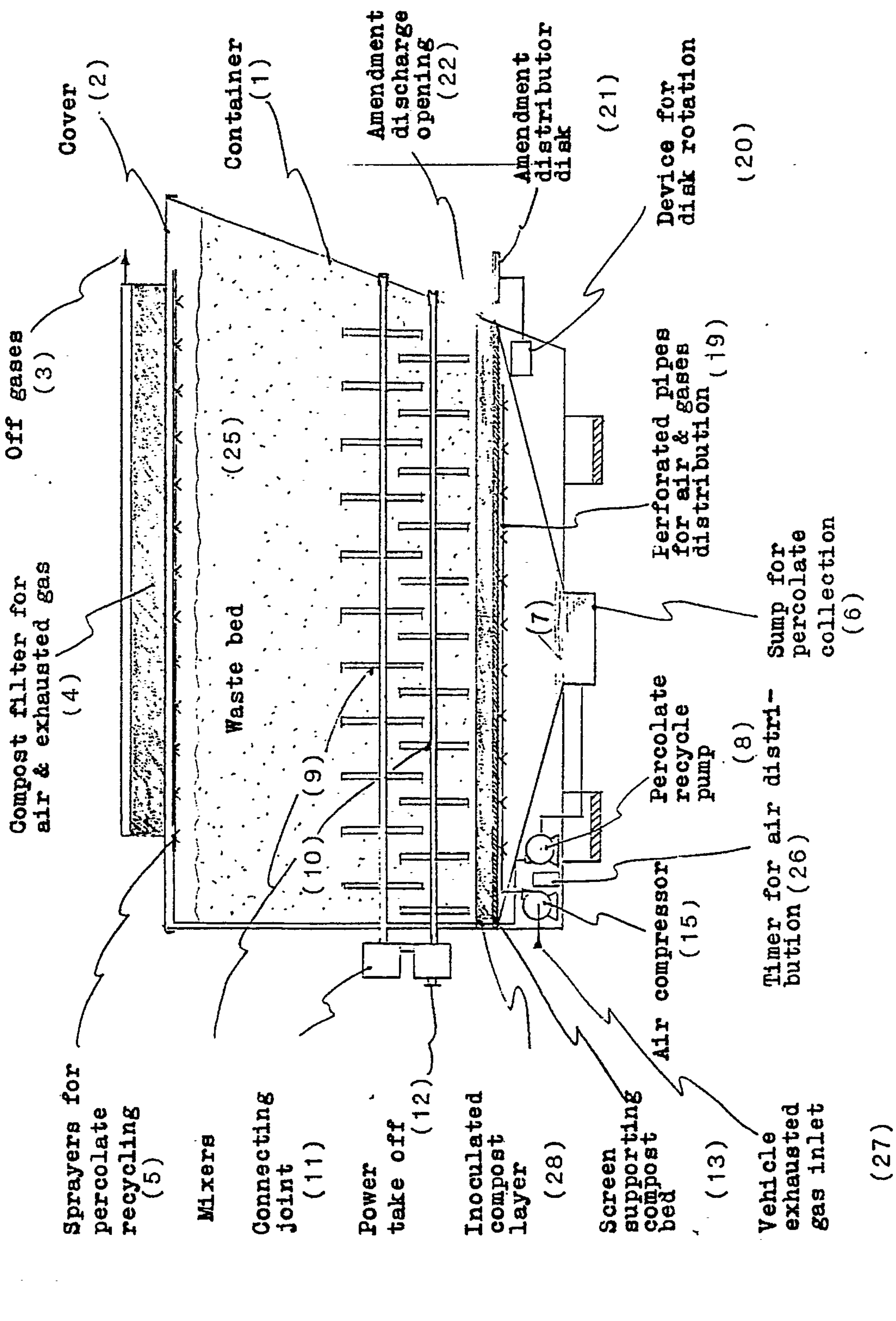
Cover (2)
Container (1)
Amendment discharge opening (22)
Amendment distributor disk (21)
Device for disk rotation (20)
Off gases (3)
Perforated pipes for air & gases distribution (19)
Sump for percolate collection (6)
(25)
Waste bed
Compost filter for air & exhausted gas (4)
(7)
Percolate recycle pump (8)
(9)
(10)
Timer for air distribution (26)
Air compressor (15)
Sprayers for percolate recycling (5)
Mixers
Connecting joint (11)
Power take off (12)
Inoculated compost layer (28)
Screen supporting compost bed (13)
Vehicle exhausted gas inlet (27)

Figure 3

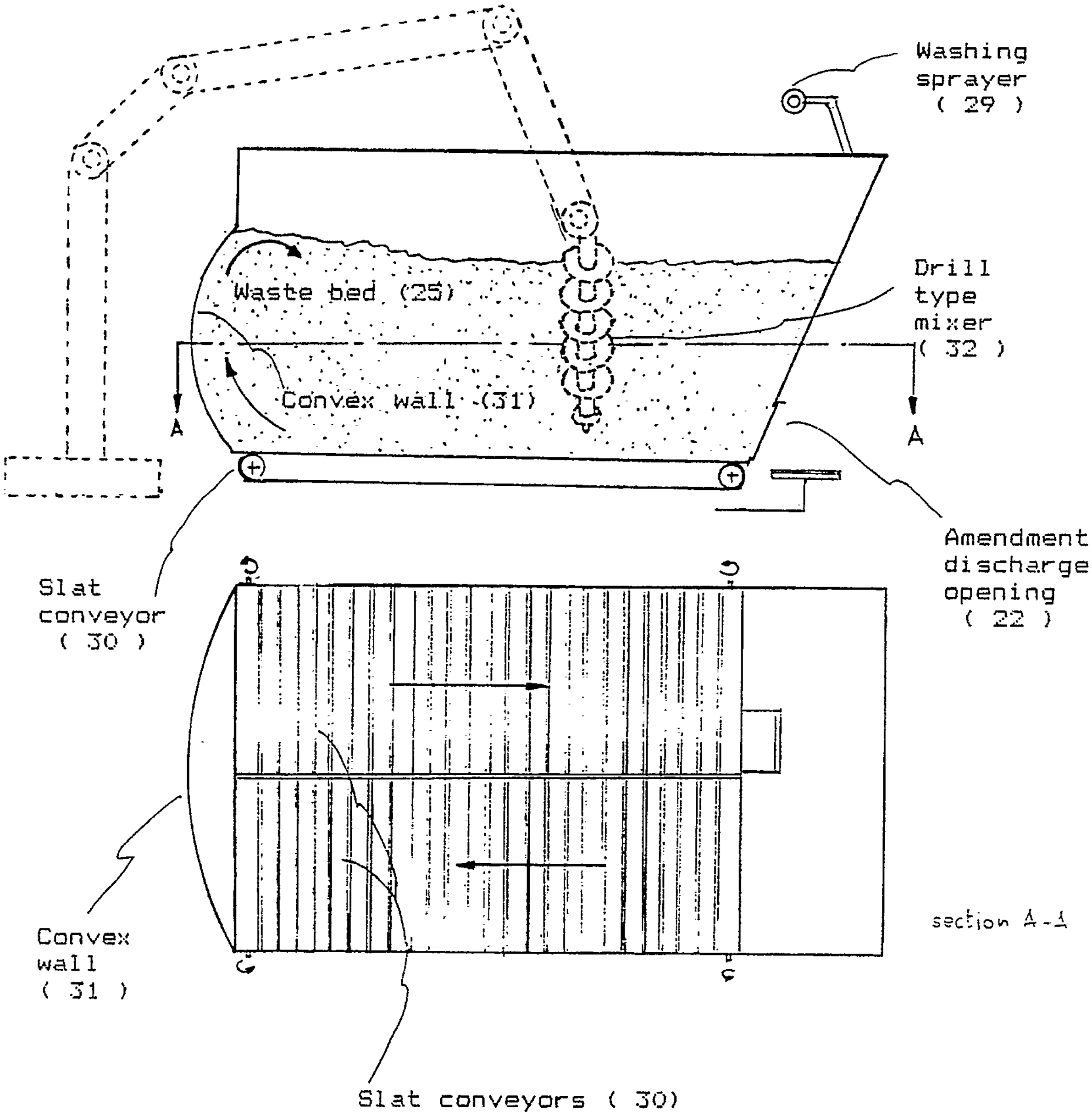
Washing sprayer ( 29 )
Waste bed (25)
Convex wall (31)
Drill type mixer ( 32 )
A
A
Amendment discharge opening ( 22 )
Slat conveyor ( 30 )
Convex wall ( 31 )
section A-A
Slat conveyors ( 30)